# EUROPEAN PATENT SPECIFICATION

(11) **EP 2 134 601 B1**
(45) Date of publication and mention of the grant of the patent: **17.11.2010**
(21) Application number: 08736316.4
(22) Date of filing: 17.04.2008
(51) Int. Cl.: B64D 11/02

(54) **VACUUM TOILET SYSTEM AND METHOD FOR WASTE WATER TRANSPORT AND WASTE WATER COLLECTION IN AN AIRCRAFT**
VAKUUMTOILETTENSYSTEM UND VERFAHREN FÜR ABWASSERTRANSPORT UND ABWASSERSAMMLUNG IN EINEM FLUGZEUG
SYSTEME ET PROCEDE DE TOILETTE A VIDE DESTINE AU TRANSPORT D'EAUX USEES ET A LA COLLECTE D'EAUX USEES DANS UN AERONEF

(30) Priority: 19.04.2007 DE 102007018549; 19.04.2007 US 925197 P
(43) Date of publication of application: 23.12.2009
(73) Proprietor: Airbus Operations GmbH, 21129 Hamburg (DE)
(72) Inventor: RIEGER, Ulrich, 22607 Hamburg (DE); HOFFJANN, Claus, 21147 Hamburg (DE)
(74) Representative: Kopf, Korbinian Paul
(86) International application number: PCT/EP2008/054648
(87) International publication number: WO 2008/128952

(56) References cited:
- EP-A- 1 698 735
- WO-A-03/004785
- WO-A-2007/002119
- WO-A-2007/017184
- DE-A1-102005 013 566
- US-A- 4 819 279
- US-A- 4 955 091
- US-A- 5 133 853
- US-A- 5 372 710

## Description

### REFERENCE TO RELATED APPLICATIONS

This application claims the benefit of the filing date of German Patent Application No. 10 2007 018 549.0-22 filed April 19, 2007 and of United States Provisional Patent Application No. 60/925,197 filed April 19, 2007.

### FIELD OF THE INVENTION

The present invention relates to toilet systems for aircraft. The present invention specifically relates to a vacuum toilet system for transporting toilet waste water and for collecting the waste water in an aircraft, an aircraft with a corresponding toilet system, the utilization of a corresponding toilet system in an aircraft and a method for transporting and for collecting toilet waste water in an aircraft.

### TECHNOLOGICAL BACKGROUND

In contrast to flushing toilets, the waste water of vacuum toilets is sucked from the toilet into connected lines by a generated pressure difference. For this purpose, known vacuum toilets for aircraft consist of a toilet module, a waste water tank, a vacuum generator, a control device and lines between these different components. In this case, the waste water tank and the lines up to the toilet module are subjected to the external pressure of the surrounding atmosphere of the aircraft in the idle state.

The toilet, in contrast, which forms part of the cabin area is subjected to the cabin pressure level that is raised in comparison with the external pressure while cruising. It is separated from the lines subjected to the lower external pressure by a flushing valve that is closed in the idle state. This pressure difference between the high cabin pressure and the low external pressure causes the removal of the toilet waste water as described below. During a flushing request, the flushing valve of the toilet is opened such that the existing pressure difference causes an air current to flow from the cabin into the toilet module, into the lines up to the waste water tank and ultimately outboard. This air current transports solid as well as liquid components of the waste water into the waste water tank, wherein this waste water tank is designed such that the solid and the liquid components are collected in a tank and the gaseous components can escape outboard via an outboard line. In case the pressure difference does not suffice for the removal of the waste water as it occurs, for example, while the doors of the aircraft are open during a layover on the ground, a control device ensures that a vacuum generator generates the required pressure difference.

Due to the connection of the waste water tank to the surroundings, the cabin pressure difference acts upon the lines and the waste water tank in the idle state of the system. These components therefore need to be designed such that they withstand this stress. At the beginning of the flushing process, the pressure difference directly acts upon the flushing valve of the toilet such that the additional noise development of the so-called vacuum bang occurs when the toilet valve is opened.

Such a vacuum toilet is known from US-A-4955091, which constitutes the closest prior art.

### SUMMARY OF THE INVENTION

It is an object of the present invention to disclose an improved vacuum toilet system for aircraft as defined by the features of claim 1. The present invention concerns also a method for transporting toilet waste water of a vacuum toilet system as defined by the features of claim 11.

According to one embodiment of the present invention, a vacuum toilet system for transporting toilet waste water and for collecting the waste water in an aircraft is disclosed, wherein the vacuum toilet system is designed in such a way that it comprises a waste water transport tank and a waste water collection tank. The waste water collection tank is always subjected to the cabin pressure and designed for collecting the waste water. The transport of the waste water is performed by the waste water transport tank in combination with a pressure difference between the toilet and the outboard ventilation.

In other words, the waste water collection tank is not subjected to the pressure difference between the toilet and an outboard ventilation that is required for the waste water removal at any time before, during or after a flushing process.

This separation of the two functions "transport" and "collection" of the waste water by means of two different tanks, namely the waste water collection tank and the waste water transport tank, may make it possible to avoid the necessity of a pressure-stable design of the waste water collection tank in form and material. Likewise, the thus far occurring vacuum bang may be avoided.

In addition to construction-related weight advantages, this may also provide the option of designing the waste water collection tank in a conformable fashion, i.e., such that it is adapted to the aircraft contour.

In addition to a weight advantage in comparison with conventional solutions, this may also provide an improved economy of space for the waste water collection tank in the underfloor region of the aircraft, in which the tank may, for example, be arranged. This advantage of an improved integration ability may become more and more important in the course of planning widebody aircraft.

According to the present invention, the vacuum toilet system furthermore comprises a toilet with a flushing valve and an outboard ventilation. In this case, the vacuum toilet system is designed such that the pressure difference only acts upon the flushing valve when the outboard ventilation is open.

In other words, the vacuum toilet system comprises, e.g., a toilet with flushing valve lines and an outboard ventilation. In this case, the vacuum toilet system has a cabin pressure region and an external pressure region in the idle state before a flushing request is initiated by a user. The cabin pressure region comprises the toilet, the lines from the toilet to the waste water transport tank, the lines from the waste water transport tank to the outboard ventilation, the waste water collection tank and the lines from the waste water transport tank to the waste water collection tank. The external pressure region, in contrast, comprises the lines from the outboard ventilation to a skin of the aircraft. As described above, this means that the pressure difference only acts upon the flushing valve when the outboard ventilation is open.

In this case, the outboard ventilation may have any mechanical design that withstands the required pressure difference and has the two states open and closed. For example, the outboard ventilation may be realized in the form of an outboard ventilation valve.

According to another aspect of the present invention, the vacuum toilet system furthermore comprises a pressure-tight waste water tank separator valve. In this case, the vacuum toilet system is designed in such a way that the waste water collection tank is separated from the waste water transport tank by the waste water tank separator valve.

Since the waste water tank separator valve is designed in a pressure-light fashion, it is ensured that the waste water collection tank is not subjected to the occurring pressure difference during a flushing process. This may allow for a light, weight-saving design of the waste water collection tank. Likewise, it is also possible to realize this tank with a contour that is adapted to the aircraft. Possible advantages of this so-called conform tank may be a superior economy of space and a lighter, weight-saving construction due to the absence of pressure. The integration ability of the vacuum toilet system into an aircraft, particularly into the underfloor region thereof, may be significantly improved with this measure.

According to another aspect of the present invention, the vacuum toilet system is designed in such a way that the transport of the waste water from the waste water transport tank into the waste water collection tank takes place without a pressure difference between the two tanks.

During a flushing request, the toilet flushing valve initially opens. The cabin pressure is still present in the lines up to the outboard ventilation. Subsequently, the outboard ventilation is opened. The pressure difference between the cabin and the surroundings causes an air current that is directed outboard from the toilet through the lines and the waste water transport tank. In this case, the waste water remains in the waste water transport tank. The outboard ventilation is then closed again and the cabin pressure is once again adjusted in the lines from the toilet module up to the outboard ventilation. Subsequently, the toilet flushing valve is closed in order to prevent annoying odors in the toilets and in the cabin area. At that time, the waste water collection tank and the waste water transport tank are subjected to the cabin pressure level. Consequently, the transport of the waste water from the waste water transport tank into the waste water collection tank takes place without a pressure difference between the two tanks.

According to another aspect of the present invention, the vacuum toilet system is designed in such a way that the transport of the waste water from the waste water transport tank into the waste water collection tank takes place under the influence of the gravitational force only.

The upper arrangement of the waste water transport tank above the waste water collection tank alone may make it possible to transport the waste water from the waste water transport tank into the waste water collection tank by means of the gravitational force. In this case, the waste water tank separator valve merely needs to be opened and no additional mechanism or pressure difference is required.

According to another aspect of the present invention, the vacuum toilet system is designed in such a way that the waste water transport tank is realized in the form of a cyclone separator.

A separation of liquid and solid components from the air current may be achieved with this measure. In this case, the waste water is tangentially admitted into the waste water transport tank, i.e., the cyclone separator. However, the waste water transport tank may also be realized in accordance with any other design that allows such a separation. For example, the waste water transport tank could be designed analogous to a conventional aircraft waste water tank. However, due to the separation of the waste water transport and collection functions, it would merely have to have a volume of a few flushing processes such that a significant weight saving can be achieved.

According to another aspect of the present invention, the vacuum toilet system is designed in such a way that the waste water collection tank comprises an odor trap.

The waste water collection tank is ventilated relative to the cabin so as to adjust the cabin pressure in the waste water collection tank. In order to prevent annoying odors in the cabins, the waste water collection tank is provided with an odor trap.

According to another aspect of the present invention, the vacuum toilet system furthermore comprises a second waste water transport tank, wherein the vacuum toilet system is designed in such a way that both waste water transport tanks are connected to the waste water collection tank independently of one another.

In order to ensure an adaptation of the vacuum toilet system to the aircraft size, a conformable waste water collection tank may be combined with two or more waste water transport tanks. This may ensure that the different transport processes can take place independently of one another during the simultaneous utilization of a single waste water collection tank. Another advantage of a common conformable waste water collection tank for several waste water transport tanks may be seen in avoiding that waste water collection tanks on different sides of the aircraft are filled unevenly. Such an uneven additional lateral load could, under certain circumstances, have consequences on the flight stability of the aircraft. Likewise, a possible shut-down of the toilet system due to a full waste water collection tank as a result of uneven use may be counteracted.

According to another aspect of the present invention, the vacuum toilet system is designed in such a way that the waste water collection tank has such a contour that it is realized in the form of a conform tank that is adapted to the aircraft fuselage and/or the surrounding space.

The waste water collection tank is subjected to the cabin pressure at all times. The pressure difference acting upon the waste water transport tank may not affect the waste water collection tank at all because it is separated from the waste water transport tank by a pressure-tight waste water tank separator valve. Consequently, the waste water collection tank may be realized in the form of an unpressurized waste water collection tank. In this context, the term unpressurized refers to a tank that is subjected to the cabin pressure and, in contrast to a currently used tank that is acted upon by the pressure difference between the cabin and the surroundings, not acted upon by a pressure difference at any time. This may have the advantageous effect that the contour of the waste water collection tank does not have to fulfil any stability criteria resulting from a pressure difference. The contour of this is tank therefore can be adapted to the aircraft and its shape. This embodiment may not only provide the advantage of an improved economy of space because the waste water collection tank can be designed entirely in accordance with the space and surrounding criteria, but also may make it possible to realize a lighter construction because the material and space requirements resulting from an effective pressure difference no longer need to be taken into account. The design of the waste water collection tank therefore can be completely focused on the requirements with respect to the improved economy of space, the improved integration ability and the lighter construction.

According to another aspect of the present invention, the vacuum toilet system is designed in such a way that the waste water collection tank features a drainage valve for emptying the waste water collection tank.

In order to empty a filled waste water collection tank, for example, during a layover at an airport, the lower bottom of the collection tank is provided with an outlet that may be realized in the form of a drainage valve or any other conceivable type of stopper.

According to another aspect of the present invention, the vacuum toilet system is designed in such a way that the waste water transport tank has the volume of at least two flushing processes.

Due to the inventive vacuum toilet system, in which the toilet waste water is initially transported into the waste water transport tank and subsequently into the waste water collection tank, it may be possible to limit the waste water transport tank to a relatively small volume. In the inventive vacuum toilet system, it may be ensured that the waste water is additionally transported from the waste water transport tank into the waste water collection tank before a new flushing request can be initiated. This may guarantee that the waste water transport tank only needs to accommodate the expected quantity of one flushing process although the waste water transport tank should have a size that corresponds to a volume of two flushing processes for safety reasons.

According to aspect of the present invention, the vacuum toilet system furthermore features a control device and a vacuum generator, wherein the vacuum toilet system is designed in such a way that the control device controls the pressure difference when a flushing process is requested and activates the vacuum generator if a minimum pressure difference is not reached.

If a flushing request is initiated for the inventive vacuum toilet system, the control device initially controls the existing pressure difference between the cabin pressure and the external pressure because a minimum pressure difference needs to exist for the removal of the waste water. If this minimum pressure difference is not available, the vacuum generator is activated in order to realize an efficient removal of the waste water. For example, no pressure difference exists between the cabin pressure and the external pressure while the doors are open during a layover of the aircraft on the ground. The vacuum generator is situated, for example, between the outboard ventilation and the skin of the aircraft. In this case, a negative pressure referred to the cabin pressure is generated in the region between the closed outboard ventilation and the vacuum generator. If the required pressure difference exists, the removal of the waste water can be realized by opening the flushing valve and opening the outboard ventilation.

According to another embodiment of the present invention, a method for transporting toilet waste water and for collecting the waste water in an aircraft is disclosed. In this case, the method comprises the following steps: transporting the waste water into a waste water transport tank by means of a pressure difference between the toilet and an outboard ventilation and collecting the waste water in a waste water collection tank, wherein the waste water collection tank is always subjected to a cabin pressure.

The vacuum toilet system for use in the inventive method may furthermore contain: a flushing valve in the toilet, an outboard ventilation, a waste water tank separator valve, lines between these elements, particularly an outboard ventilation line, a control device, a vacuum generator, a waste water transport tank in the form of a cyclone separator and a drainage valve for emptying the waste water collection tank.

In the idle state of the vacuum toilet system, i.e., when no flushing request has been initiated, the flushing valve of the toilet, the outboard ventilation and the waste water tank separator valve are closed. The lines and the waste water transport tank are subjected to the cabin pressure. The line that begins at the outboard ventilation and extends up to the aircraft skin is subjected to the external pressure. A flushing process of a vacuum toilet system, in which the inventive method is implemented, takes place as described below: the flushing request is sent to the control device by means of a flushing button. This control device checks if the pressure difference between the cabin pressure and the external pressure suffices for removing the waste water. If this is not the case, the vacuum generator is activated in order to generate a sufficiently high pressure difference. In this case, the line from the outboard ventilation up to the skin of the aircraft is designed in such a way that the vacuum generator is able to generate a negative pressure that suffices for removing the waste water in this region. The toilet flushing valve is initially opened. The lines up to the outboard ventilation are still subjected to the cabin pressure. The outboard ventilation is now opened and the pressure difference between the cabin pressure and the ambient pressure or the generated negative pressure, respectively, results in an air current for realizing the removal of the waste water. In this case, the air current flows in the outboard direction from the toilet into the waste water transport tank through the corresponding lines. The waste water transport tank is designed in such a way that the waste water remains in the waste water transport tank. For example, the waste water transport tank is constructed in the form of a cyclone separator that causes a separation of liquid and solid components from the air current. However, it may also be possible to utilize any other design of the waste water transport tank that separates liquid and solid components from the air current. For example, the waste water transport tank may be designed analogous to a conventional solution of an aircraft waste water tank. In this case, the conventional shape used is a cylindrical shape with domes that close both ends. However, since the waste water transport tank according to the present invention does not collect the waste water, it may be realized in such a way that it only needs to accommodate a waste water volume of two flushing processes. The liquid and solid material separated by the waste water transport tank remains in the waste water transport tank during the transport time. After a sufficient time for the removal of the waste water has elapsed, the outboard ventilation is closed such that the cabin pressure can be adjusted in the lines from the toilet up to the outboard ventilation through the still open flushing valve of the toilet. The flushing valve of the toilet is now closed so as to prevent additional annoying odors in the cabin area. In order to completely separate the waste water transport and storage functions in this method, the waste water tank separator valve is now opened in order to transport the waste water into the waste water collection tank. The waste water tank separator valve may have any design that makes it possible to seal the waste water transport tank relative to the waste water collection tank in a pressure-tight fashion. The waste water tank separator valve furthermore has the two states open and closed. In this case, the transport of the waste water takes place without any pressure difference because the waste water transport tank and the waste water collection tank are subjected to the cabin pressure. With respect to the waste water collection tank, this is achieved by ventilating the waste water collection tank relative to the cabin area, wherein possible annoying odors within the cabin are counteracted by arranging an odor trap on the waste water collection tank. The transfer of the waste water from the waste water transport tank into the waste water collection tank may be realized, for example, by means of the gravitational force. After a sufficient time for transporting the waste water from the waste water transport tank into the waste water collection tank has elapsed, the waste water tank separator valve is closed and the system changes over into the idle state or initial state. The emptying of the waste water collection tank may be realized with the aid of the drainage valve.

This method may ensure that the waste water collection tank is never subjected to the existing pressure difference while the method is carried out. This may allow a conformable and unpressurized design of the waste water collection tank. In this context, the term unpressurized design means that one does not have to take into account that the waste water collection tank needs to withstand a pressure difference in the construction and engineering phases of the waste water collection tank. This may provide the advantage that the waste water collection tank can be adapted to the contour of the aircraft. A significantly improved economy of space of the waste water collection tank, in particular, is achieved in this fashion. Since the integration ability of components becomes more and more important in the construction of widebody aircraft, this represents another important improvement in comparison with existing vacuum toilet systems. On the other hand, it may also be possible to utilize lightweight construction materials for the waste water collection tank. This may result in a significant weight reduction in comparison with conventional waste water collection tanks.

In another step of the method, a flushing valve in the toilet is opened before opening the outboard ventilation.

This step of the method may make it possible to prevent the so-called vacuum bang.

In conventional methods for transporting toilet waste water and for collecting the waste water in an aircraft, the pressure difference between the cabin pressure and the external pressure acts upon the closed flushing valve of the toilet when a flushing process is initiated. During the initiation of the flushing process, this flushing valve is opened and a significant noise development occurs, namely the so-called vacuum bang.

Annoying noises caused by a vacuum bang may be eliminated with the inventive method because the flushing valve of the toilet is opened first in this case and the pressure difference only acts upon the outboard ventilation. Since the outboard ventilation is arranged in the rear fuselage region and in the underfloor region, the vacuum bang is shifted into this region and the intensity of the vacuum bang is reduced due to higher inertial forces in the system.

In another step of the method, the flushing valve in the toilet may also be selectively opened after opening the outboard ventilation.

This variation of the flushing mode can be used if it is determined that the vacuum bang is advantageous for the removal of the toilet waste water and the annoying noise in the form of a vacuum bang in the cabin is acceptable. During a possible flushing request, the system consequently would be selectively adjusted such that the outboard ventilation is opened first and the lines up to the flushing valve of the toilet are subjected to the ambient pressure. The flushing valve of the toilet is not opened until the next step such that the pressure difference is once again present at the flushing valve analogous to a conventional solution. This means that the flushing sequence of the valves can be varied and thusly adapted to the requirements and the flight phase, respectively. During a night flight, for example, it would be desirable to prevent any annoying noises caused by a vacuum bang within the cabin area. In this case, one would select the flushing mode, in which the flushing valve on the toilet opens first and no vacuum bang occurs.

According to another embodiment (claim 14) of the present invention, an aircraft is disclosed that comprises a corresponding vacuum toilet system. Furthermore, another embodiment (claim 15) of the invention discloses the utilization of a corresponding vacuum toilet system in an aircraft.

It should be noted that the aspects of the invention described with respect to the vacuum toilet system also apply to the method, the utilization and the aircraft.

Other aspects and advantages of the invention may be elucidated by the following

### description of the figures.

The figures show schematic representations that are not to scale.

### SHORT DESCRIPTION OF THE FIGURES

Figure 1 shows a schematic two-dimensional section through the vacuum toilet system according to the present invention.
Figure 2 shows a schematic two-dimensional representation through the vacuum toilet system according to another aspect of the present invention.
Figure 3 shows a schematic two-dimensional section through the vacuum toilet system according to another aspect of the present invention.
Figure 4 shows a schematic representation of an aircraft according to the present invention.

### DETAILED DESCRIPTION OF EXEMPLARY EMBODYMENTS

Exemplary aspects of the present invention are described below with reference to the figures.

In the following description of the figures, the same reference numerals are used for identical or similar elements.

However, the corresponding explanations also apply to an aircraft that features such a vacuum toilet system, to the utilization of a corresponding vacuum toilet system in an aircraft and to a method for transporting toilet waste water and for collecting the waste water in an aircraft.

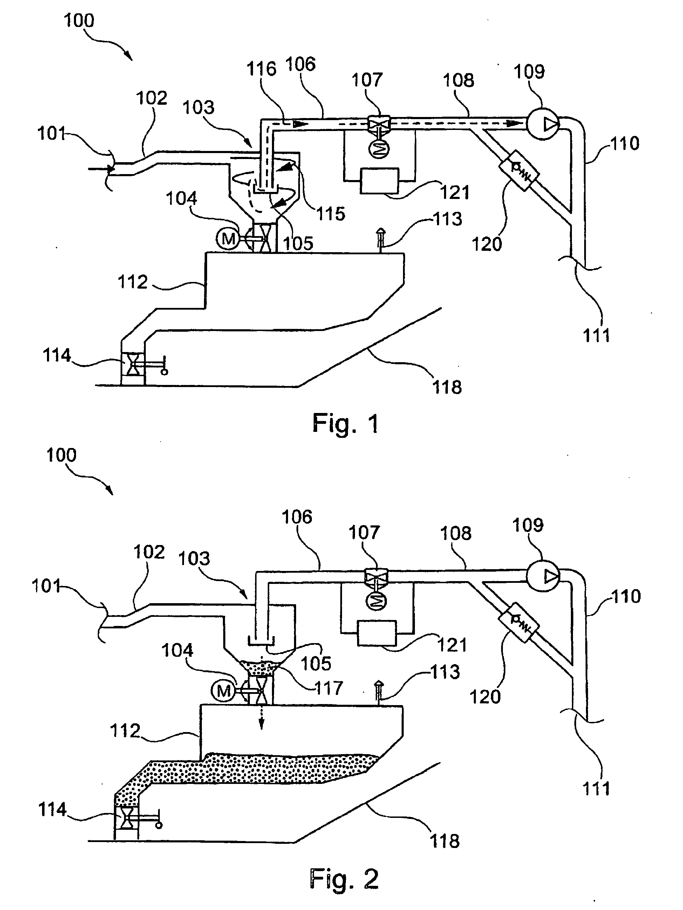

Figure 1 shows a schematic two-dimensional section through the inventive vacuum toilet system 100 according to one embodiment of the present invention. The flushing valve of the toilet 101 represents the connection between the toilet/cabin area and the area that contains the remaining system. This remaining area may be situated behind or underneath the cabin area. In conventional solutions for vacuum toilet systems, a so-called vacuum bang occurs at this flushing valve 101, wherein said vacuum bang may be eliminated with the present invention. The reason for this is the significant pressure difference, to which the flushing valve is directly subjected. Since the present invention can also be selectively operated in the mode of a conventional vacuum toilet system, the flushing valve is designed in such a way that it withstands the corresponding pressure difference. A first line 102 leads from this flushing valve to the waste water transport tank 103. This line is realized in a pressure-proof fashion, wherein the term pressure-proof means that this line withstands the expected pressure difference required for the removal of the waste water. A second line 106 leads from the waste water transport tank 103 to the outboard ventilation 107. Likewise, the outboard ventilation 107 is connected to a vacuum generator 109 by means of another line 108. This vacuum generator 109 is also connected to a line 110 that extends up to the skin 111 of the aircraft. All of these lines are realized in a pressure-proof fashion. Likewise, the waste water transport tank 103 has such a shape and is made of such a material that it withstands the pressure difference. In this case, the waste water transport tank may be realized in the form of a cyclone separator so as to ensure that the air current arriving from the toilet is separated from liquid and solid components within the waste water transport tank. The air current can now escape outboard through the lines 106, 108 and 110. In case a cyclone separator is used, the tangential admission of the waste water into the waste water transport tank ensures the separation of the waste water from the air current. This provides the additional advantage that no additional impact protection needs to be installed in order to prevent objects with a high power of impact such as batteries from passing through the system. This results in a weight advantage in comparison with conventional solutions for waste water storage tanks in vacuum toilet systems.

Due to the separation of the two functions "transport of the waste water" and "collection of the waste water," the volume of the waste water transport tank can be limited to a minimal volume. This minimal volume may amount, for example, to the expected volume of two flushing processes. This represents another weight advantage of the present invention in comparison with conventional solutions. However, the waste water transport tank may also be realized in accordance with a conventional aircraft waste water tank. A separating device 105 needs to be provided in this case so as to prevent that liquid and solid components of the waste water are admitted into the line 106. The waste water tank separator valve 104 is arranged, for example, underneath the waste water transport tank 103 in this case. This valve is also realized in a pressure-proof fashion because it is subjected to the effective pressure difference during the transport of the waste water into the waste water collection tank. This makes it possible to prevent forces resulting from the pressure difference from acting upon the waste water collection tank 112. In this case, the waste water tank separator valve regulates the transport of the waste water from the waste water transport tank 103 into the waste water collection tank 112. Since both tanks are subjected to the cabin pressure when the waste water is transported from the waste water transport tank into the waste water collection tank, this transfer takes place in a completely unpressurized fashion. The transfer can be ensured, for example, by means of the gravitational force only. The waste water collection tank, in contrast, may be realized in the form of a conformable unpressurized collection tank for waste water because it is always subjected to the cabin pressure. This makes it possible to adapt the shape of the waste water collection tank to its surroundings, for example, the aircraft fuselage. This in turn results in an optimal economy of space and integration ability of the waste water collection tank.

Since the waste water collection tank is never subjected to a pressure difference, it is possible to realize the waste water collection tank in the form of a lightweight construction. However, this does not exclude the option of utilizing a waste water collection tank that is made of conventional materials and has a conventional shape. The optional lightweight construction represents a very important aspect, particularly in times of great efforts to realize widebody aircraft with less weight. A drainage valve 114 is arranged on the bottom end of the waste water collection tank 112. This refers to any stopper that is designed such that the waste water collection tank can be emptied, for example, during a layover on the ground. Since the waste water collection tank 112 is ventilated relative to the cabin, it is provided with an odor trap 113 so as to prevent annoying odors in the cabin area.

A flushing process made possible with this exemplary embodiment of the present invention, in which the so-called vacuum bang is prevented and a conformable, unpressurized waste water collection tank is used, is carried out as described below with the aforementioned elements. In the idle state of the vacuum toilet system, the flushing valve of the toilet, the outboard ventilation and the waste water tank separator valve are closed. The lines and the waste water transport tank are subjected to the cabin pressure. The lines beginning at the outboard ventilation 107, i.e., the lines 108 and 110, are subjected to the external pressure. If a flushing request of the toilet is initiated, a control device (121) checks if a sufficient cabin pressure difference is present. In this context, the term cabin pressure difference refers to the pressure difference between the cabin pressure and the external pressure. If a minimum pressure difference is not reached, the vacuum generator 109 is activated. This vacuum generator generates a negative pressure in the lines upstream of the outboard ventilation 107, i.e., in the region of the line 108. The flushing valve of the toilet 101 now opens first. The lines up to the outboard ventilation and the waste water transport tank are still subjected to the cabin pressure. The outboard ventilation 107 is now opened. The pressure difference between the cabin and the surroundings results in an air current that flows in the outboard direction from the toilet through the corresponding lines and the waste water transport tank. This air current causes the transport of the waste water into the waste water transport tank. Since the waste water transport tank 103 is constructed in the form of a cyclone separator and the waste water is admitted into this cyclone separator tangentially, solid and liquid components are separated from the air current and remain in the waste water transport tank. However, it would also be conceivable to utilize a different design of this waste water transport tank. For example, the transport tank could be realized analogous to conventional aircraft waste water tanks. Since the waste water transport tank only needs to accommodate the volume of no more than two flushing processes, its volume can be significantly reduced in comparison with conventional solutions. After a sufficient time for the removal of the waste water into the waste water transport tank has elapsed, the outboard ventilation is closed. This means that the cabin pressure is now once again adjusted in the system from the toilet up to the outboard ventilation because the flushing valve of the toilet is still open. In order to prevent possible annoying odors in the cabin area, the toilet flushing valve 101 is now closed again. The waste water is now transported from the waste water transport tank 103 into the waste water collection tank 112 by means of the waste water tank separator valve 104 to be opened. Since both tanks 103 and 112 are now subjected to the cabin pressure, it is ensured that this transport takes place without any pressure difference. For example, the waste water is transported into the waste water collection tank under the influence of the gravitational force. This waste water collection tank is always ventilated relative to the cabin and provided with an odor trap 113. Once the entire waste water is transferred into the waste water collection tank, the waste water tank separator valve is closed again and the system changes over into the idle state. Lastly, it should also be noted that the pressure difference between the flushing valve of the toilet and the outboard ventilation is responsible for the transport of the waste water, wherein this pressure difference exactly corresponds to the pressure difference between the cabin pressure and the external pressure. It should furthermore be noted that the system can be designed in such a way that the outboard ventilation is initially opened when a flushing request is initiated and the entire train of lines is subjected to the ambient pressure. The flushing valve of the toilet can then be opened in the next step. Subsequently, this alternative flushing mode takes place as described above. This flushing mode variance can be used, for example, if it is determined that the so-called vacuum bang is advantageous for the removal of the waste water. Due to the option of choosing between two flushing sequences, one or the other flushing mode can be selected depending on the flight phase of the aircraft. It would be possible, e.g., to select the flushing mode, in which the vacuum bang is prevented, while cruising during nighttime hours. It should also be noted that the exemplary embodiment of the present invention according to Figure 1 shows only one waste water transport tank 103. However, it is also possible to connect several independent subsystems with separate toilet lines and waste water transport tanks to one waste water collection tank 112. This provides the advantage of decoupling the disposal processes during the identical utilization of one storage tank. Likewise, it is possible to counteract a different utilization of subsystems that may, under certain circumstances, cause a premature shut-down of the system due to a full waste water collection tank. In this respect, Figure 1 shows the admission of the waste water 115 into the waste water transport tank 103 and the discharge of the air current 116 through the lines 106 and 108. Furthermore, a ventilation line check valve (120) may be installed.

Figure 2 shows a schematic two-dimensional section through the inventive vacuum toilet system according to another embodiment of the present invention. This figure shows how the waste water 117 is admitted into the waste water collection tank 112 through the open waste water tank separator valve 104. Since the outboard ventilation 107 is closed, the region of the line 106, the waste water transport tank 103 and the line 102 are subjected to the cabin pressure. Since the waste water collection tank 112 is ventilated relative to the cabin, it is always subjected to the cabin pressure. Figure 2 shows that the waste water collection tank 112 is realized conformable, i.e., that its shape is adapted to the aircraft fuselage 118. This results in an optimal economy of space of the waste water collection tank and therefore makes it possible to utilize the space within an aircraft in a simpler and more effective fashion. Since the waste water collection tank is no longer subject to stability criteria resulting from the occurring pressure difference, it may conform to lightweight construction requirements with respect to its shape as well as the material selection.

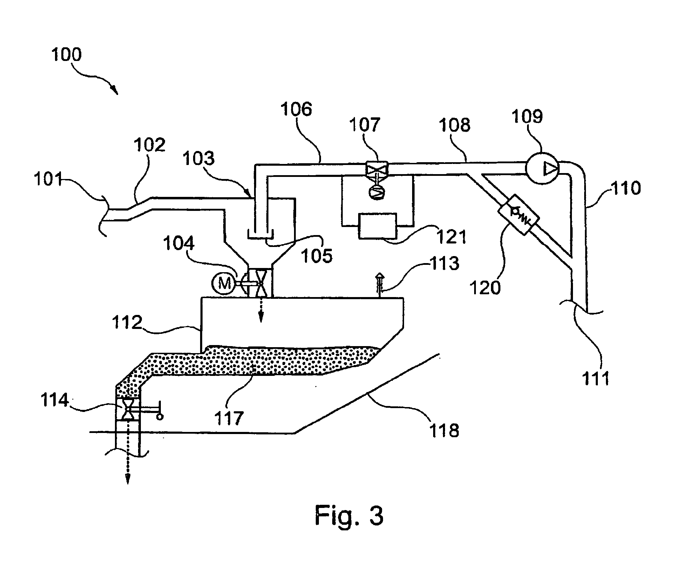

Figure 3 shows a schematic two-dimensional section through the inventive vacuum toilet system according to another exemplary embodiment of the present invention. This figure shows the vacuum toilet system while the conformable and unpressurized waste water collection tank 112 is emptied. The drainage valve 114 is opened and the waste water 117 can drain from the waste water collection tank 112. In this case, the drainage valve is designed in such a way that it is possible to empty the waste water collection tank. Consequently, any stopper that fulfills this requirement is suitable for use as a drainage valve.

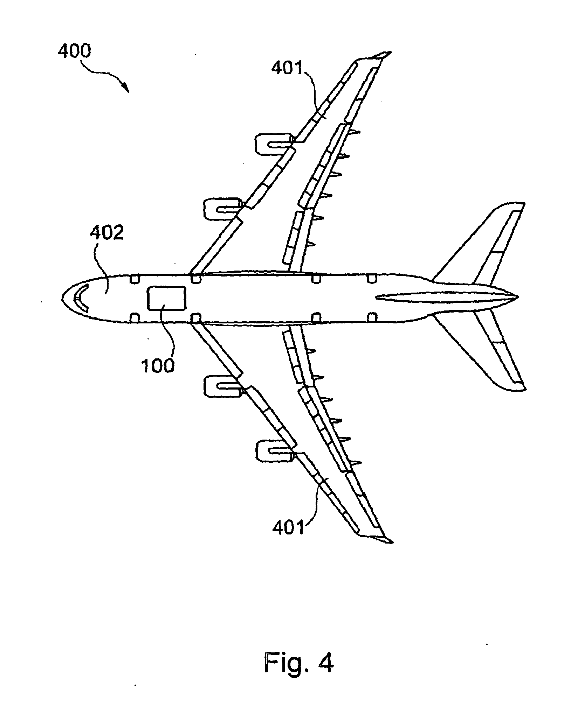

Figure 4 shows a schematic two-dimensional representation of an aircraft according to another exemplary embodiment of the present invention. This figure shows an aircraft 400 that features a fuselage 402 and wings 401. Likewise, the aircraft features a vacuum toilet system (100) according to the present invention, wherein the vacuum toilet system is illustrated, for example, in the front fuselage region in this case. However, this does not mean that the system cannot be positioned at other locations of the aircraft.

As a supplement, it should be noted that "comprising" and "featuring" do not exclude any other elements or steps and that "a" or "an" does not exclude a plurality. It should furthermore be noted that characteristics or steps that were described with reference to one of the above embodiments can also be used in combination with other characteristics or steps of other above-described embodiments. The reference symbols in the claims should not be interpreted in a restrictive sense.

## Claims

1. A vacuum toilet system (100) for transporting toilet waste water and for collecting the waste water in an aircraft, with the vacuum toilet system comprising:
a toilet;
an outboard ventilation valve (107);
a waste water transport tank (103);
a waste water collection tank (112) that is always subjected to a cabin pressure; a toilet flushing valve (101) arranged between the toilet and the waste water transport tank (103); wherein the vacuum toilet system is designed in such a way that the transport of the waste water is performed by the waste water transport tank in combination with a pressure difference between the toilet and the outboard ventilation valve (107);
wherein the vacuum toilet system includes a control device (121) designed in such a way that, if a flushing request from the toilet is initiated, the flushing valve (101) of the toilet opens first, wherein the waste water transport tank (103) is still subjected to the cabin pressure, after which the outboard ventilation valve (107) is opened, resulting in an air current that flows from the toilet through the waste water transport tank (103);
wherein the waste water is collected in the waste water collection tank (112);
wherein the outboard ventilation valve (107) is situated between the waste water transport tank (103) and a skin of the aircraft.

2. The vacuum toilet system of claim 1, with the vacuum toilet system (100) furthermore comprising:
a toilet with a flushing valve (101); and
wherein the vacuum toilet system includes a control device (121) designed in such a way that the pressure difference only acts upon the flushing valve when the outboard ventilation valve is open.

3. The vacuum toilet system of one of claims 1 or 2, with the vacuum toilet system furthermore comprising:
a pressure-tight waste water tank separator valve (104);
wherein the waste water collection tank is designed in such a way that it is separated from the waste water transport tank by the waste water tank separator valve.

4. The vacuum toilet system of one of claims 1 to 3,
wherein the waste water transport tank (103) is realized in the form of a cyclone separator.

5. The vacuum toilet system of one of claims 1 to 4,
wherein the waste water collection tank comprises an odor trap (113).

6. The vacuum toilet system of one of claims 1 to 5, with the vacuum toilet system furthermore comprising:
a second waste water transport tank;
wherein both waste water transport tanks are connected to the waste water collection tank independently of one another.

7. The vacuum toilet system of one of claims 1 to 6,
wherein the waste water collection tank has such a contour that it is realized in the form of a conform tank that is adapted to the aircraft fuselage and/or a space surrounding the waste water collection tank.

8. The vacuum toilet system of one of claims 1 to 7, furthermore comprising:
a drainage valve (114);
wherein the drainage valve is designed for emptying the waste water collection tank.

9. The vacuum toilet system of one of claims 1 to 8,
wherein the waste water transport tank has a volume of at least two flushing processes.

10. The vacuum toilet system of one of claims 1 to 9, furthermore comprising:
a control device (121); and
a vacuum generator (109);
wherein the control device is adapted for controlling the pressure difference when a flushing process is requested and for activating the vacuum generator if a minimum pressure difference is not reached.

11. A method for transporting toilet waste water of a vacuum toilet system (100) and for collecting the waste water in an aircraft, with the method comprising the steps:
initiating a flushing request from a toilet;
opening a flushing valve (101) of the toilet, wherein a waste water transport tank (103) is still subjected to a cabin pressure;
opening an outboard ventilation valve (107), resulting in an air current that flows from the toilet through the waste water transport tank (112);
emptying the waste water transport tank by closing the outboard ventilation valve and by opening a waste water tank separator valve (104); and
wherein the outboard ventilation valve is situated between the waste water transport tank and a skin of the aircraft.

12. The method of claim 11, furthermore comprising the following step:
opening a flushing valve (101) in the toilet before the outboard ventilation valve is opened.

13. The method of claim 11, wherein the opening of the flushing valve in the toilet selectively takes place after the outboard ventilation valve is opened.

14. An aircraft with a vacuum toilet system (100) of one of claims 1-10.

15. The utilization of a vacuum toilet system (100) of one of claims 1-10 in an aircraft.

## Patentansprüche

1. Vakuum-Toilettensystem (100) zum Transport von Abwasser einer Toilette und zur Sammlung des Abwassers in einem Flugzeug, das Vakuum-Toilettensystem aufweisend:
eine Toilette;
ein Außenbord-Belüftungsventil (107);
einen Abwasser-Transporttank (103);
einen Abwasser-Sammeltank (112), der stets einem Kabinendruck ausgesetzt ist;
ein Toilettenspülventil (101), das zwischen der Toilette und dem Abwasser-Transporttank (103) angeordnet ist;
wobei das Vakuum-Toilettensystem derart ausgestaltet ist, dass der Transport des Abwassers durch den Abwasser-Transporttank in Kombination mit einem Druckunterschied zwischen der Toilette und dem Außenbord-Belüftungsventil (107) erfolgt;
wobei das Vakuum-Toilettensystem ein Kontrollgerät (121) aufweist, das derart ausgestaltet ist, dass bei einer Spülanfrage von der Toilette das Toilettenspülventil (101) zuerst öffnet, wobei der Abwasser-Transporttank (103) immer noch Kabinendruck ausgesetzt ist, wonach das Außenbord-Belüftungsventil (107) geöffnet wird, wodurch ein Luftstrom von der Toilette durch den Abwasser-Transporttank (103) strömt;
wobei das Abwasser in dem Abwasser-Sammeltank (112) gesammelt wird;
wobei das Außenbord-Belüftungsventil (107) zwischen dem Abwasser-Transporttank (103) und der Flugzeughaut angeordnet ist.

2. Vakuum-Toilettensystem nach Anspruch 1, das Vakuum-Toilettensystem weiterhin aufweisend:
eine Toilette mit einem Spülventil (101); und
wobei das Vakuum-Toilettensystem ein Kontrollgerät (121) aufweist, das derart ausgestaltet ist, dass der Druckunterschied an dem Spülventil nur anliegt, wenn die Außenbord-Belüftung geöffnet ist.

3. Vakuum-Toilettensystem nach einem der Ansprüche 1 oder 2, das Vakuum-Toilettensystem weiterhin aufweisend:
ein druckdichtes Abwassertank-Separator-Ventil (104);
wobei der Abwasser-Sammeltank derart ausgestaltet ist, dass er von dem Abwasser-Transporttank durch das Abwassertank-Separator-Ventil getrennt ist.

4. Vakuum-Toilettensystem nach einem der Ansprüche 1 bis 3,
wobei der Abwasser-Transporttank (103) in Form eines Zyklon-Abscheiders ausgeführt ist.

5. Vakuum-Toilettensystem nach einem der Ansprüche 1 bis 4,
wobei der Abwasser-Sammeltank einen Geruchsverschluss (113) aufweist.

6. Vakuum-Toilettensystem nach einem der Ansprüche 1 bis 5, das Vakuum-Toilettensystem weiterhin aufweisend:
einen zweiten Abwasser-Transporttank;
wobei beide Abwasser-Transporttanks unabhängig voneinander an den Abwasser-Sammeltank angeschlossen sind.

7. Vakuum-Toilettensystem nach einem der Ansprüche 1 bis 6,
wobei der Abwasser-Sammeltank in seiner Kontur als konformer, an den Flugzeugrumpf und/oder einen den Abwasser-Sammeltank umgebenden Raum angepasster Tank ausgestaltet ist.

8. Vakuum-Toilettensystem nach einem der Ansprüche 1 bis 7, weiterhin aufweisend:
ein Drainage-Ventil (114);
wobei das Drainage-Ventil zur Leerung des Abwasser-Sammeltanks ausgeführt ist.

9. Vakuum-Toilettensystem nach einem der Ansprüche 1 bis 8,
wobei der Abwasser-Transporttank das Volumen von wenigstens zwei Spülvorgängen aufweist.

10. Vakuum-Toilettensystem nach einem der Ansprüche 1 bis 9, weiterhin aufweisend:
ein Kontrollgerät (121); und
ein Vakuum Generator (109);
wobei das Kontrollgerät bei Anforderung eines Spülvorgangs den Druckunterschied kontrolliert und bei Unterschreitung eines Mindestdruckunterschiedes den Vakuum Generator in Betrieb setzt.

11. Verfahren zum Transport von Abwasser einer Toilette eines Vakuum-Toilettensystems (100) und zur Sammlung des Abwassers in einem Flugzeug, das Verfahren aufweisend die Schritte:
Auslösen einer Spülanfrage von der Toilette;
Öffnen eines Spülventils (101) der Toilette, wobei der Abwasser-Transporttank (103) immer noch Kabinendruck ausgesetzt ist;
Öffnen eines Außenbord-Belüftungsventils (107), wodurch ein Luftstrom von der Toilette durch den Abwasser-Transporttank (103) strömt;
Entleeren des Abwasser-Transporttanks durch Schließen des Außenbord-Belüftungsventils und durch Öffnen des Abwassertank-Separator-Ventils (104); und
wobei das Außenbord-Belüftungsventil zwischen dem Abwasser-Transporttank und der Flugzeughaut angeordnet ist.

12. Verfahren nach Anspruch 11, weiterhin aufweisend den folgenden Schritt:
Öffnen eines Spülventils (101) in der Toilette vor dem Öffnen des Außenbord-Belüftungsventils.

13. Verfahren nach Anspruch 12, wobei das Öffnen des Spülventils in der Toilette wahlweise nach dem Öffnen des Außenbord-Belüftungsventils erfolgt.

14. Flugzeug mit einem Vakuum-Toilettensystem (100) nach einem der Ansprüche 1-10.

15. Verwendung eines Vakuum-Toilettensystems (100) nach einem der Ansprüche 1-10 in einem Flugzeug.

## Revendications

1. Système de toilettes sous vide (100) pour transporter des eaux usées de toilettes et pour recueillir les eaux usées dans un avion, le système de toilettes sous vide comportant :
des toilettes,
une soupape de ventilation extérieure (107),
un réservoir de transport d'eaux usées (103),
un réservoir de collecte d'eaux usées (112) qui est toujours soumis à une pression de cabine,
une soupape de chasse d'eau de toilettes (101) agencée entre les toilettes et le réservoir de transport d'eaux usées (103), dans lequel le système de toilettes sous vide est conçu de manière à ce que le transport des eaux usées soit effectué par le réservoir de transport d'eaux usées en combinaison avec une différence de pression entre les toilettes et la soupape de ventilation extérieure (107),
dans lequel le système de toilettes sous vide inclut un dispositif de commande (121) conçu de manière à ce que, si une demande de chasse d'eau provenant les toilettes est déclenchée, la soupape de chasse d'eau (101) des toilettes s'ouvre en premier, dans lequel le réservoir de transport d'eaux usées (103) est toujours soumis à la pression de cabine, après quoi la soupape de ventilation extérieure (107) est ouverte, le résultat étant un courant d'air qui s'écoule depuis les toilettes à travers le réservoir de transport d'eaux usées (103),
dans lequel les eaux usées sont recueillies dans le réservoir de collecte d'eaux usées (112),
dans lequel la soupape de ventilation extérieure (107) est située entre le réservoir de transport d'eaux usées (103) et un revêtement de l'avion.

2. Système de toilettes sous vide selon la revendication 1, le système de toilettes sous vide (100) comportant en outre :
des toilettes ayant d'une soupape de chasse d'eau (101), et
dans lequel le système de toilettes sous vide inclut un dispositif de commande (121) conçu de manière à ce que la différence de pression agisse uniquement sur la soupape de chasse d'eau lorsque la soupape de ventilation extérieure est ouverte.

3. Système de toilettes sous vide selon l'une des revendications 1 ou 2, le système de toilettes sous vide comportant également :
une soupape de séparation de réservoirs d'eaux usées étanche à la pression (104),
dans lequel le réservoir de collecte d'eaux usées est conçu de manière à ce qu'il soit séparé du réservoir de transport d'eaux usées par la soupape de séparation de réservoirs d'eaux usées.

4. Système de toilettes sous vide selon l'une des revendications 1 à 3,
dans lequel le réservoir de transport d'eaux usées (103) est réalisé sous la forme d'un séparateur à cyclone.

5. Système de toilettes sous vide selon l'une des revendications 1 à 4,
dans lequel le réservoir de collecte d'eaux usées comporte un piège à odeurs (113).

6. Système de toilettes sous vide selon l'une des revendications 1 à 5, le système de toilettes sous vide comportant de plus :
un second réservoir de transport d'eaux usées,
dans lequel les deux réservoirs de transport d'eaux usées sont reliés au réservoir de collecte d'eaux usées indépendamment l'un de l'autre.

7. Système de toilettes sous vide selon l'une des revendications 1 à 6,
dans lequel le réservoir de collecte d'eaux usées a un contour tel qu'il est réalisé sous la forme d'un réservoir adapté au fuselage d'avion et/ou à un espace entourant le réservoir de collecte d'eaux usées.

8. Système de toilettes sous vide selon l'une des revendications 1 à 7, comportant en outre :
une vanne de vidange (114),
dans lequel la vanne de vidange est conçue pour vider le réservoir de collecte d'eaux usées.

9. Système de toilettes sous vide selon l'une des revendications 1 à 8,
dans lequel le réservoir de transport d'eaux usées a un volume au moins égal à deux processus de chasse d'eau.

10. Système de toilettes sous vide selon l'une des revendications 1 à 9, comportant également :
un dispositif de commande (121), et
un générateur de vide (109),
dans lequel le dispositif de commande est adapté pour commander la différence de pression lorsqu'un processus de chasse d'eau est demandé et pour activer le générateur de vide si une différence de pression minimale n'est pas atteinte.

11. Procédé pour transporter des eaux usées de toilettes d'un système de toilettes sous vide (100) et pour collecter les eaux usées dans un avion, le procédé comportant les étapes consistant à :
déclencher une demande de chasse d'eau à partir de toilettes,
ouvrir une soupape de chasse d'eau (101) des toilettes, dans lequel un réservoir de transport d'eaux usées (103) est toujours soumis à une pression de cabine,
ouvrir une soupape de ventilation extérieure (107), le résultat étant un courant d'air qui s'écoule à partir des toilettes à travers le réservoir de transport d'eaux usées (112),
vider le réservoir de transport d'eaux usées en fermant la soupape de ventilation extérieure et en ouvrant une soupape de séparation de réservoirs d'eaux usées (104), et
dans lequel la soupape de ventilation extérieure est située entre le réservoir de transport d'eaux usées et un revêtement de l'avion.

12. Procédé selon la revendication 11, comportant en outre l'étape suivante consistant à :
ouvrir une soupape de chasse d'eau (101) dans les toilettes avant que la soupape de ventilation extérieure soit ouverte.

13. Procédé selon la revendication 11, dans lequel l'ouverture de la soupape de chasse d'eau dans les toilettes a lieu sélectivement après que la soupape de ventilation extérieure ait été ouverte.

14. Avion muni d'un système de toilettes sous vide (100) selon l'une des revendications 1 à 10.

15. Utilisation d'un système de toilettes sous vide (100) selon l'une des revendications 1 à 10 dans un avion.
